**Europäisches Patentamt**

**European Patent Office**

**Office européen des brevets**

(19)

(11) Numéro de publication: **0 243 262**

**A1**

# (12) DEMANDE DE BREVET EUROPEEN

(21) Numéro de dépôt: **87400915.2**

(22) Date de dépôt: **21.04.87**

(51) Int. Cl.³: **A 01 B 49/02**
**A 01 B 33/16**

(30) Priorité: **23.04.86 FR 8605996**

(43) Date de publication de la demande:
**28.10.87 Bulletin 87/44**

(84) Etats contractants désignés:
**AT BE CH DE ES FR GB GR IT LI LU NL SE**

(71) Demandeur: **SARA 2000 SARL**
**Chaumontagne**
**F-08220 Chaumont-Porcien(FR)**

(72) Inventeur: **Sarazin, Guy**
**Sara 2000 Chaumontagne**
**F-08220 Chaumont-Porcien(FR)**

(74) Mandataire: **Gérardin, Robert Jean René**
**PROT'INNOV INTERNATIONAL SA Résidence de**
**l'Observatoire avenue Georges Clémenceau Boîte Postale**
**2764**
**F-51066 Reims Cédex(FR)**

(54) **Instrument combiné de broyage, de défrichage et de travail du sol.**

(57) Cet instrument comprend essentiellement un châssis 1, relié au tracteur par l'intermédiaire d'un attelage 'trois points' (2), sur lequel est fixé, par l'intermédiaire d'axe (3), une rangée de dents (4) travaillant entre des disques (5) fixés, par l'intermédiaire de collerettes (13), sur un arbre (6) relié au châssis (1) par l'intermédiaire de bras (7) et d'un axe (8), assurant aussi la fixation et l'articulation des bras porte-rouleau (9) assurant, par l'intermédiaire du tirant (10) de longueur réglable, le terrage et le plombage d'un rouleau (11). Le réglage en position verticale du rotor s'effectue par l'intermédiaire d'un arc-boutant (12), de longueur réglable, équipé d'un amortisseur. Les bras porte-rouleau (9) supportent une grille de nivelage, et d'enfouissement (14), réglable en distance et en position. L'arbre porte-disques (6) est entraîné en rotation par la prise de force du tracteur.

FIG.1

Instrument combiné de broyage, de defrichage et de travail du sol

L'invention concerne un instrument combiné de broyage de défrichage et de travail du sol.

Actuellement, le broyage, le défrichage et le travail du sol sont effectués séparément en utilisant des moyens spécifiques.

Le broyage est effectué en utilisant des rotors, munis de couteaux mobiles, ou des fraises rotatives entraînés à grande vitesse par la prise de force du tracteur.

Le défrichage est généralement effectué à l'aide de houes rotatives, mues par la prise de force du tracteur, d'outils à disques, de canadiens lourds ou de chisels tractés.

Enfin, le travail du sol ou la préparation du lit de semence, s'effectue en utilisant différents instruments tels que : canadiens, vibroculteurs, herses ordinaires, herses alternatives ou rotatives, houes rotatives etc...

Il résulte de cette situation une grande disparité de matériels, dont certains exigent plusieurs passages pour obtenir le résultat souhaité ; ce qui se traduit par des investissements très élevés, au niveau des exploitations agricoles, des pertes de temps, des frais d'entretien prohibitifs et une consommation importante d'énergie, qui grèvent considérablement le prix de revient des travaux agricoles.

On connaît déjà des instruments polyvalents de travail du sol, tels que ceux décrits dans les brevets :

- FRA-1.020424, ayant pour objet des perfectionnements aux machines agricoles à disques, consistant à soumettre des arbres porteurs de disques à un mouvement de rotation variable, transmis par la prise de force du tracteur. Afin d'obtenir le résultat désiré, les disques sont concaves, et les arbres sont disposés obliquement par rapport au sens de déplacement du tracteur, afin que la surface concave des disques tangente le plan de déplacement du tracteur. Toutefois, ce dispositif exige une puissance importante et il ne permet pas d'obtenir une profondeur et un nivelage suffisant du sol.

- Européen 0.085492 ayant pour objet une machine agricole combinant un arbre à disques concaves, crantés à leur périphérie, disposés obliquement par rapport au sens de déplacement du châssis, entraîné en rotation par la prise de force du tracteur, à deux arbres équipés de disques concaves ordinaires, libres en rotation, disposés obliquement par rapport au sens de déplacement du tracteur, derrière l'arbre motorisé, dans le sens opposé à celui-ci. Ce dispositif exige lui aussi beaucoup d'énergie et laisse subsister des problèmes de profondeur et de nivelage, comme dans le cas précédent.

- FRA-1.574457, ayant pour objet une machine agricole pour le travail du sol comportant un certain nombre de disques entraînés en rotation, dont les axes de rotation sont perpendiculaires au sens du déplacement du tracteur, faisant avec leur axe de rotation un angle autre que 90°, qui se caractérise principalement en ce que les disques ont été remplacés par des étoiles munies de dents ou de bras saillants, entraînés par un mécanisme dont la vitesse de rotation est indépendante de la vitesse de déplacement du tracteur,de façon que celle-ci puisse être adaptée à la nature du sol et au résultat à obtenir. Les étoiles ont,dans ce mode de construction, remplacé les disques car, si ceux-ci, étaient utilisés, la dépense d'énergie serait importante et le travail effectué n'entraînerait pas le brisage des mottes. Cet appareil ne permet pas l'utilisation séparée des moyens entrant dans sa combinaison et il n'assure pas le décompactage en profondeur du sol ni le broyage. Ce dispositif est complété d'une herse,montée devant les disques étoilés,et de disques fixés perpendiculairement sur un arbre libre,disposé devant les dents de la herse avec un certain enchevêtrement par rapport à la première rangée de celles-ci.

On connaît déjà différents instruments correspondant au préambule de la revendication 1 : certificat d'utilité FRA-2.125200. IL est constitué d'un châssis supportant, d'une part, des dents pénétrant dans le sol, montées à un certain intervalle les unes des autres et, d'autre part, parallèlement à cette rangée, un rotor constitué d'un axe sur lequel sont câlés des croisillons tournant à grande vitesse dans des plans situés, de préférence, a mi-distance entre les lames. Les bras des croisillons passent entre les dents ou juste devant celles-ci, afin d'éviter le bourrage. Le rotor tourne à grande vitesse dans le sens de l'avancement.

- Certificat d'utilité : FRA-2.535149 comporte une série de jeux rotatifs de lames disposés entre des dents ou des griffes à profil arqué, portés par un bâti. Les jeux de lames sont calés sur leur arbre d'entraînement suivant une hélice. Les arbres sont entraînés en rotation par la prise de force du tracteur.

- Demande de brevet français n° 85 03400 : il comporte des dents et deux arbres parallèles, solidaires en rotation, mus par le déplacement du châssis porteur, sur lesquels sont fixés des dispositifs aratoires pouvant s'enchevêtrer . Les roues crantées montées sur l'arbre avant et les roues dentées montées sur l'arbre arrière travaillent entre des dents fixes, disposées derrière l'arbre arrière, entre les roues dentées, dans le plan de travail des roues crantées.

Les deux premiers instruments, malgré leur relative complexité, sont destinés uniquement à la préparation de la terre après labour, quant au troisième, s'il présente une certaine polyvalence dans les travaux du sol, ne permet cependant pas d'effectuer séparément ces travaux en utilisant, pour ce faire, que l'un des moyens entrant dans sa combinaison. Il n'effectue pas la décompaction du sol en profondeur, ni le broyage des déchets de matières organiques. Aucun de ces instruments n'est muni de dispositif d'enfouissement et de nivelage.

La présente invention a pour but de remédier à ces inconvénients. L'invention, telle qu'elle est caractérisée dans les revendications, résout le problème consistant à obtenir, par l'intermédiaire d'un unique instrument, le broyage, le défrichage, le décompactage et le travail du sol ; avec la possibilité d'effectuer ces opérations séparément, par combinaison de réglages simples.

Cette invention se caractérise principalement en ce que les outils aratoires tournants sont constitués de disques plats, lisses, crantés ou gaufrés, en ce que l'arbre d'entraînement des disques est disposé perpendiculairement à la direction de déplacement du tracteur, en ce que l'arbre d'entraînement des disques est réglable en hauteur, par rapport au châssis, par l'intermédiaire de bras articulés et d'un arc-boutant de longueur réglable, en ce que les dents s'articulent verticalement par rapport au châssis, en ce que le réglage en hauteur du rouleau de terrage et de plombage est obtenu par l'intermédiaire de bras articulés et de tirants de longueur réglable, en ce que les bras articulés de traction du rouleau de terrage supportent une grille de nivelage et d'enfouissement, réglable en hauteur et en position longitudinale, tout en restant solidaire du réglage du rouleau de terrage ; ce réglage s'effectue par l'intermédiaire de moyens permettant de maintenir la grille sur un cercle ayant pour centre, l'axe d'articulation des bras porte-rotor et porte-rouleau.

Les bras reliant l'arbre porte-disques au châssis et les bras d'entraînement du rouleau de terrage, sont articulés par rapport à un même axe. Les dents sont maintenues en position angulaire par l'intermédiaire d'un dispositif de sécurité à boulons ou "non-stop". Selon un autre mode de réalisation ces dents peuvent être relevées et positionnées par l'intermédiaire d'un vérin actionné à partir du tracteur ; ce qui permet de régler l'angle d'attaque des dents ou d'obtenir leur relevage.

4

Les disques sont montés perpendiculairement ou obliquement par rapport à leur arbre d'entraînement. Lorsqu'ils sont montés obliquement par rapport à leur arbre d'entraînement, cette obliquité est alternée, à gauche et à droite, unitairement ou collectivement. Ces disques sont réalisés en deux demi-parties rapportées par boulonnage sur des collerettes solidaires de l'axe du rotor. Selon un mode de réalisation particulier du rotor l'obliquité des disques varie régulièrement le long de l'arbre d'entraînement afin de constituer, lors de la rotation, deux hélices de pas opposés enchevêtrées. Cette obliquité pouvant être réalisée dans un seul plan ou dans deux plans.

La courbure des dents est déterminée de façon que leur partie avant soit toujours située à une distance déterminée de l'axe du rotor ; quelle que soit la position de celui-ci par rapport au châssis.

Les bras porte-rotor, supportent le carter de transmission, afin que l'arbre menant soit situé sur le même arc de cercle que le pivot, dans le but d'obtenir toutes les combinaisons de réglage.

Selon un mode de réalisation particulier, les bras porte-rotor supportent le carter de transmission et sont articulés par rapport à l'arbre menant de la transmission, ainsi que les bras porte-rouleau.

Le carter de transmission est fixé de façon amovible,afin que les pignons menant et menés puissent être permutés par simple pivotement à 180° du carter, afin d'obtenir,selon le cas, une réduction, ou une multiplication des vitesses de rotation transmises au rotor. Le raccordement des axes de pignons aux arbres menant et mené s'effectuant, dans ce cas, par emmanchement, cannelés.

Le châssis comporte des points de fixation destinés à l'adaptation d'un relevage arrière permettant l'attelage d'un semoir ou de tout autre équipement ou outil suplémentaire, tel qu'un distributeur d'engrais par exemple.

L'arc-boutant de maintien et de réglage en position des bras porte-rotor est équipé d'un dispositif d'amortissement permettant au rotor de se soulever en cas de choc des disques sur un corps étranger. Selon un mode de réalisation particulier de l'invention cet arc-boutant est constitué d'un vérin hydraulique alimenté et commandé à partir du tracteur.

Selon un mode de réalisation perfectionné de l'invention, le tirant de longueur réglable,utilisé pour le réglage en hauteur du rouleau de terrage et de plombage,est constitué,lui aussi, d'un vérin hydraulique alimenté et commandé à partir du tracteur afin que la totalité des outils puissent être commandés et réglés à partir du tracteur, par l'intermédiaire de distributeurs, en fonction de la nature et de l'état du sol, de l'effort de traction exercé sur le châssis de l'instrument et du résultat à obtenir.

Comme on vient de le voir, les avantages obtenus grâce à cette invention consistent essentiellement en ceci, que les opérations de broyage, de défrichage, de décompactage et de travail du sol peuvent s'effectuer simultanément ou séparément, à des vitesses appropriées au résultat à obtenir, par l'intermédiaire d'adaptations ou de réglages simples.

D'autres caractéristiques et avantages apparaîtront dans la description qui va suivre d'un instrument selon l'invention, donné à titre d'exemple non limitatif au regard des dessins annexés, sur lesquels :

- La figure 1, représente une vue de côté, en coupe, de l'instrument.

- La figure 2, représente une vue de dessus en coupe du système de transmission.

- La figure 3, représente une vue de côté du système de relevage et de réglage hydraulique des dents.

- La figure 4, représente un rotor à disques, combiné à des dents fixes enchevêtrées dans les disques.

- La figure 5, représente des disques fixés obliquement en alternance, à gauche et à droite, entre des dents fixes enchevêtrées.

- La figure 6, représente des disques fixés obliquement en alternance, deux à deux, entre des dents fixes enchevêtrées.

- La figure 7, représente une vue de côté du dispositif de relevage supplémentaire.

Les figures représentent un instrument combiné de broyage, de défrichage et de travail du sol comprenant essentiellement un châssis 1, relié au tracteur par l'intermédiaire d'un attelage "trois points" 2 sur lequel est fixé, par l'intermédiaire d'axes 3, une rangée de dents 4 travaillant entre des disques 5 fixés, par l'intermédiaire de collerettes 13, sur un arbre 6 relié au châssis 1 par l'intermédiaire de bras 7 et d'un axe 8, assurant aussi la fixation et l'articulation de bras porte-rouleau 9 assurant, par l'intermédiaire de tirant 10 de longueur réglable, le terrage et le plombage d'un rouleau 11. Le réglage en position verticale du rotor s'effectue par l'intermédiaire d'un arc-boutant 12, de longueur réglable, équipé d'un amortisseur.

Les bras porte-rouleau 9 supportent une grille de nivelage et d'enfouissement 14, réglable en distance et en position. L'arbre porte-disques 6 est entraîné en rotation par la prise de force du tracteur

6

par l'intermédiaire d'un multiplicateur 15 de deux liaisons à cardan 16, d'arbres cannelés 17 montés chacun dans un palier 18 fixé contre le côté intérieur des bras 7 porte-rotor, de manchons cannelés 19 et 20, montés dans des paliers 21 et 22 solidarisés au carter de transmission 23, sur lesquels sont fixés respectivement des pignons ou des poulies d'entraînement 24 et 25 pouvant être indifféremment utilisées comme pignon ou poulie menant ou mené selon le sens de montage du carter 23 sur les bras porte-rotor 7. Le réglage en position ou le relevage des dents 4 est obtenu, selon un mode de réalisation particulier, par l'intermédiaire d'un vérin 26, commandé à partir du tracteur, monté entre la partie supérieure 4a des dents 4 et l'extrémité d'une équerre 27 fixée au châssis 1.

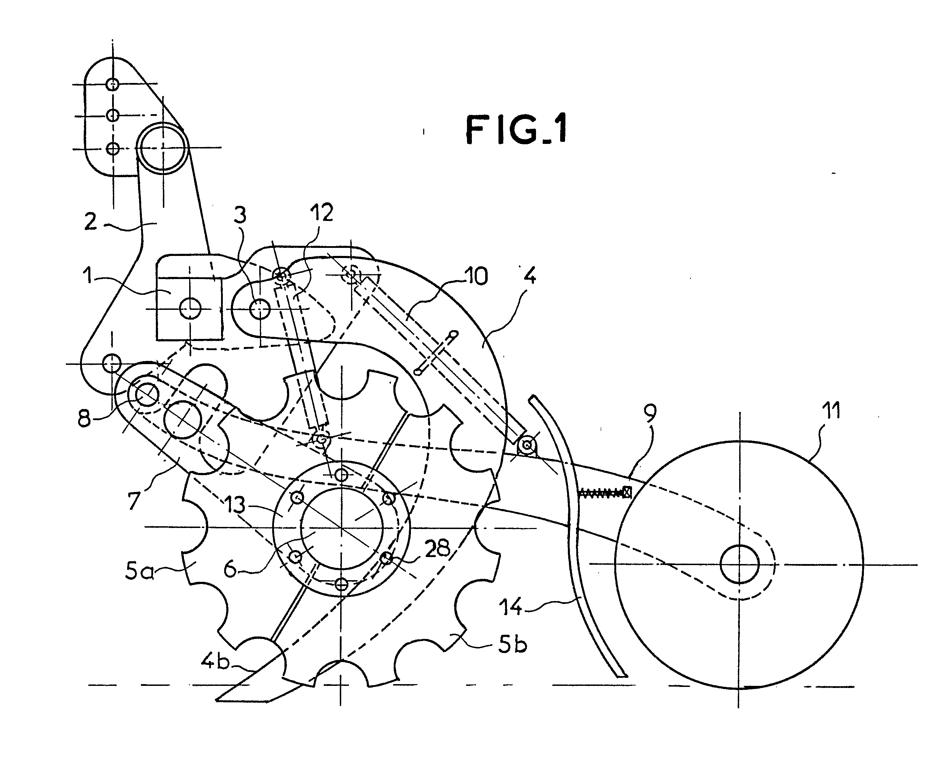

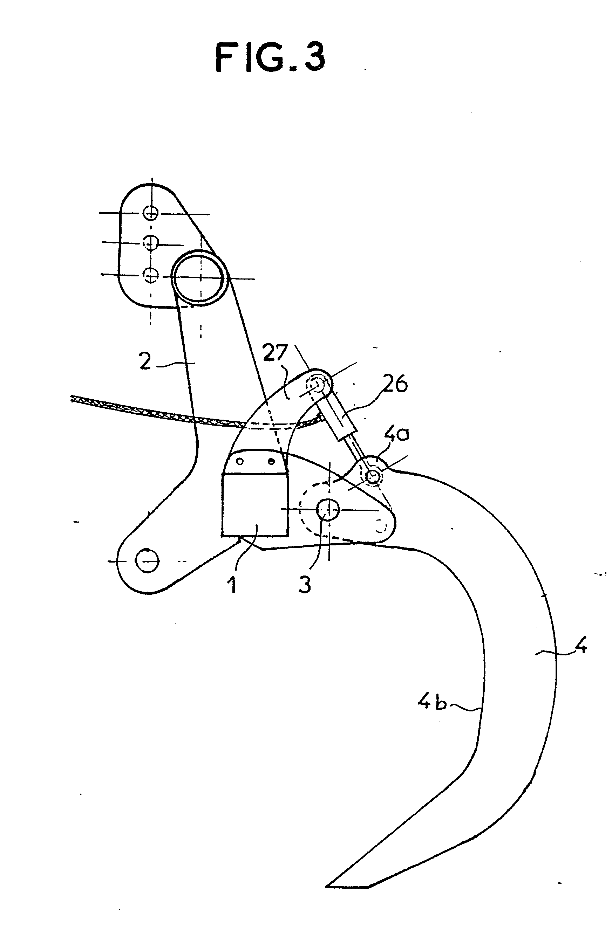

En se reportant aux figures 1 et 3, on remarque : que la partie avant 4b des dents 4 présente une courbure déterminée pour que, compte tenu de la distance séparant l'axe de rotation 3 des dents 4 de l'axe 8 d'articulation des bras porte-rotor 7, cette partie avant se trouve toujours à une distance déterminée de l'axe 6 du rotor porte-disques. Ces dents 4 sont enchevêtrées entre les disques 5 du rotor et leur extrémité est située en avant du plan vertical contenant l'axe du rotor afin d'obtenir le défrichage suivi du broyage, Le travail du sol étant assuré par la grille 14 fixé entre les bras articulés 9. Ainsi, il sera possible d'intensifier ou de réduire l'action des dents 4 et du rotor à disques collectivement, en modifiant la longueur du tirant 10 de réglage du terrage du rouleau 11, ou individuellement, par action sur l'arc-boutant 12 de réglage en hauteur du rotor. Pour certaines utilisations les dents 4 peuvent être réglées ou relevées par l'intermédiaire d'un vérin 26 commandé à partir du tracteur.

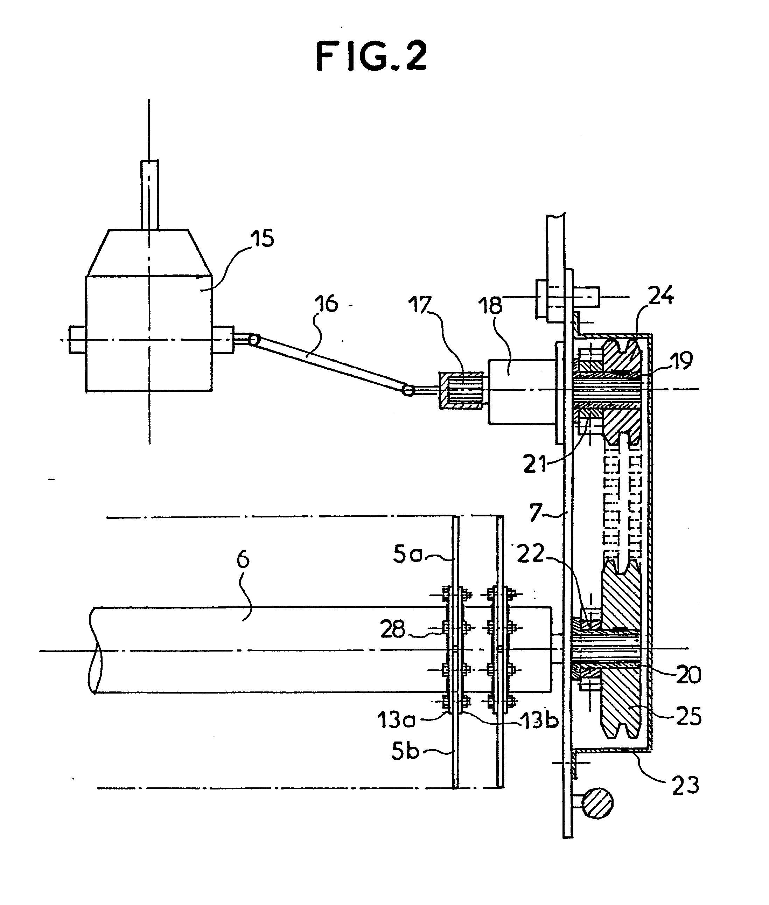

En examinant la figure 2 on remarque que, selon le sens du montage du carter 23 sur les bras porte-rotor 7, on obtiendra une démultiplication ou, au contraire, une multiplication de la vitesse de rotation du rotor à disques, par rapport à la vitesse de sortie du boîtier 15, elle-même fonction de la vitesse de la prise de mouvement du tracteur. Avec des vitesses de sortie du boîtier 15 de 270 et de 500t/mn il est possible ainsi d'obtenir, selon le sens de montage du boîtier 23, avec un rapport de transmission de 0,65 entre les poulies 24 et 25, des vitesses de rotation de rotor de 175, 325, 415 ou 770 t/mn, gamme de vitesses qui couvre tous les besoins.

En examinant conjointement les figures 1 et 2, on remarque que les disques 5 sont constitués de deux demi-parties 5a et 5b, qui se fixent sur l'arbre 6 par insertion en deux collerettes 13a et 13b soudées sur l'arbre 6 en fonction de l'angle d'inclinaison que l'on désire obtenir. La solidarisation s'effectue par l'intermédiaire de boulons 28 ou d'autres moyens du genre. Il est donc possible, par ce moyen, de réparer un rotor par simple remplacement des demi-disques détériorés.

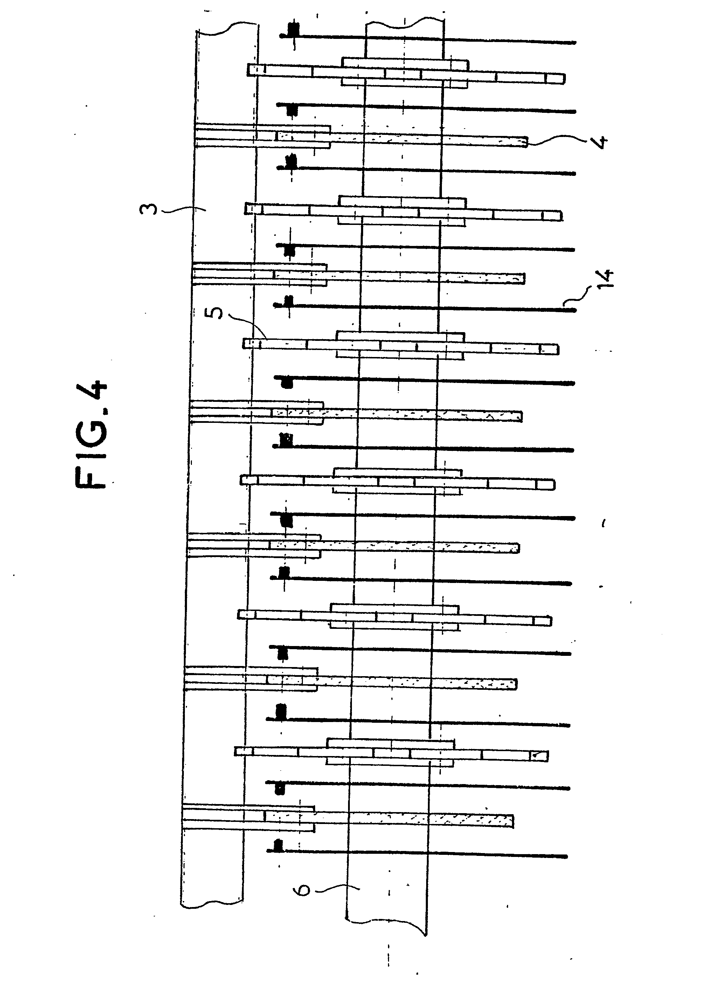

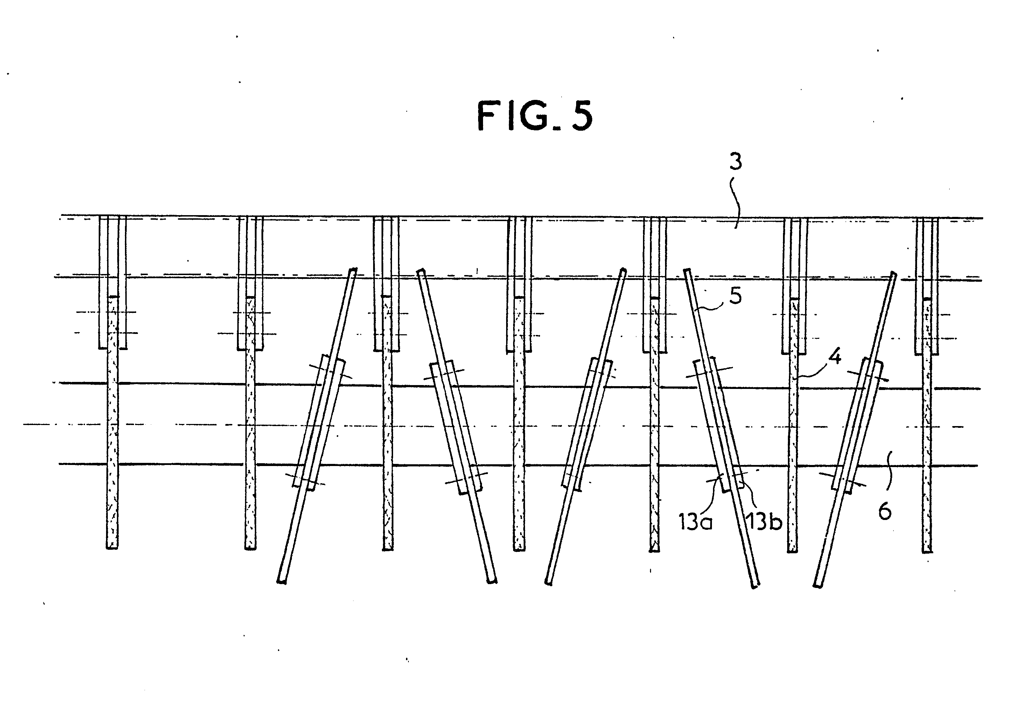

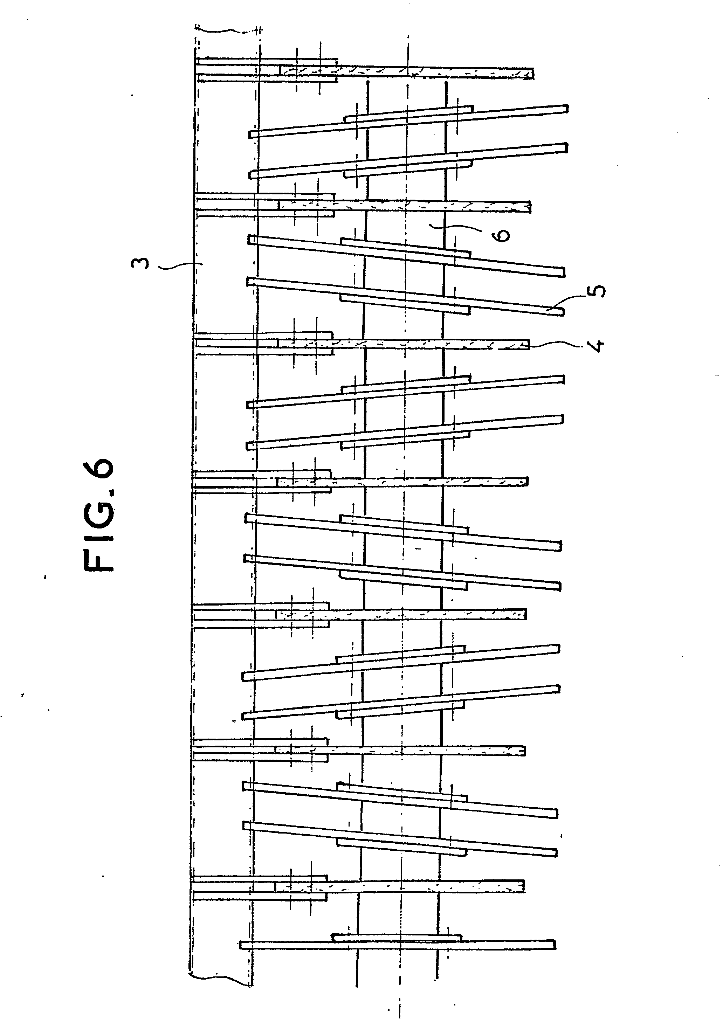

En examinant successivement les figures 4, 5 et 6, on remarque que, selon un premier mode de réalisation (fig. 4), le rotor est constitué de disques 5, fixés perpendiculairement à l'axe 6, de façon qu'une dent soit située dans l'intervalle compris entre deux disques. Selon un second mode de réalisation (fig. 5) les disques sont fixés obliquement, en alternance individuellement, à gauche et à droite, de façon qu'une dent soit située dans l'intervalle compris entre deux disques. Selon un troisième mode de réalisation (fig. 6) les disques 5 sont fixés obliquement, en alternance deux par deux, à gauche et à droite, de façon qu'une dent 4 soit située dans l'intervalle compris entre deux groupes de disques d'inclinaison opposée. Dans un mode de réalisation (fig. 5) comme dans l'autre (fig. 6) l'inclinaison des disques par rapport à leur axe 6 est réalisée dans un seul plan ou dans deux plans perpendiculaires, de façon à obtenir deux hélices enchevêtrées de pas opposés. Ainsi, en fonctionnant, la terre soulevée par les dents 4 est rejetée à gauche, puis à droite, avant d'être reprise par la grille 14 qui affine le travail. Cette grille d'enfouissement et de nivelage, par ses dimensions, laisse passer la terre fine projetée par les disques en rotation et empêche les grosses mottes et les matières organiques de passer, afin de les enfouir dans le fond du lit de semence. Cette grille se règle par rapport aux bras porte-rouleau 9. Il est donc possible, d'adapter le nivelage et la finesse du lit de semence ; ainsi, plus la grille sera positionnée près des disques 5 et vers le bas, plus le lit de germination sera fin. Dans le cas contraire, ce lit sera grossier. Le rouleau plombeur, quant à lui, assure le terrage des outils et le plombage du lit de semence.

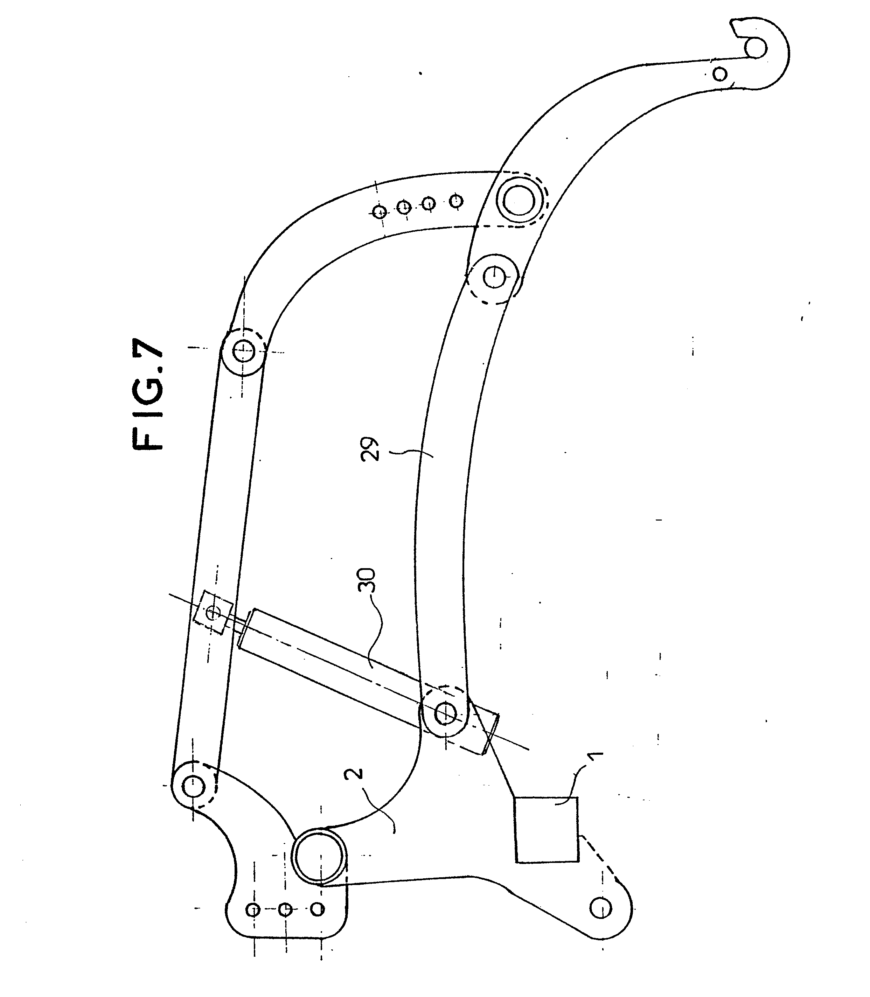

Le dispositif de relevage représenté à la figure 7 permet, quant à lui, d'adjoindre à l'instrument, un distributeur d'engrais, un semoir ou tout autre outil ou équipement supplémentaire. Ce dispositif est constitué d'un système articulé 29, solidaire du châssis 1 et de l'attelage "trois points" de l'instrument, dont la géométrie peut être modifiée par l'intermédiaire d'un vérin 30 alimenté et actionné à partir du tracteur.

L'instrument selon l'invention est destiné principalement aux travaux agricoles, mais il peut être utilisé aussi en maraichage, en arboriculture, en viticulture et en travaux publics.

Revendications

1. Instrument combiné de broyage, de défrichage et de travail du sol comportant des outils aratoires tournants, solidaires d'un arbre transversal entraîné en rotation par l'intermédiaire de la prise de force du tracteur, et des dents, fixées au châssis, venant s'enchevêtrer avec les outils aratoires tournants, dont la profondeur de travail est déterminée par un rouleau de terrage et de plombage, caractérisé en ce que les outils aratoires tournants sont constitués de disques (5) lisses, crantés ou gaufrés, en ce que l'arbre porte-disques (6) est disposé perpendiculairement au sens de déplacement d'un châssis porteur (1), en ce que l'arbre porte-disques (6) est réglable en hauteur, par rapport au châssis (1), par l'intermédiaire de bras articulés (7) et d'un arc-boutant (12) de longueur réglable, en ce que les dents (4) s'articulent verticalement par rapport au châssis (1), en ce que le réglage en hauteur du rouleau de terrage et de plombage (11), par rapport au châssis (1), est obtenu par l'intermédiaire de tirants de longueur réglable (10), en ce que les bras articulés porte-rouleau (9) supportent une grille de nivelage et d'enfouissement (14) disposée derrière les disques (5).

2. Instrument selon la revendication 1, caractérisé en ce que les bras (7), qui relient l'arbre porte-disques (6) au châssis, et les bras (9) d'entraînement du rouleau de terrage et de plombage (11), sont articulés par rapport à un même axe (8).

3. Instrument selon la revendication 1, caractérisé en ce que les dents (4) sont maintenues en position par l'intermédiaire d'un dispositif de sécurité à boulons ou non stop.

4. Instrument selon la revendication 1, caractérisé en ce que les disques (5) sont réalisés en deux demi-parties (5a et 5b).

5. Instrument selon la revendication 1, caractérisé en ce que les disques (5) sont fixés perpendiculairement ou obliquement par rapport à leur arbre d'entraînement (6).

6. Instrument selon les revendications 4 et 5, caractérisé en ce que les deux demi-parties (5a et 5b) des disques, se fixent sur l'arbre (6) par l'intermédiaire de collerettes (13a et 13b) et de boulons (28).

7. Instrument selon la revendication 5, caractérisé en ce que, lorsque les disques (5) sont montés obliquement, l'inclinaison correspondante est alternée, individuellement ou collectivement, à gauche et à droite.

9

0243262

8. Instrument selon la revendication 7, caractérisé en ce que les disques (5) sont inclinés dans un seul plan ou dans deux plans perpendiculaires, pour constituer deux hélices enchevêtrées, de pas opposés à un ou plusieurs filets.

9. Instrument selon la revendication 1, caractérisé en ce que la courbure de la partie avant (4b) des dents est déterminée pour que celle-ci soit toujours située à une distance déterminée de l'arbre porte-disques (6), quelle que soit la position de celui-ci par rapport au châssis (1).

10. Instrument selon la revendication 1, caractérisé en ce que la position de la grille (14), de nivelage et d'enfouissement, est réglable par rapport aux bras porte-rouleau (9), afin de maintenir celle-ci (14) sur un cylindre ayant pour axe, l'axe (8) de pivotement des bras porte-rotor (7) et porte-rouleau (9).

11. Instrument selon la revendication 1, caractérisé en ce que le mouvement est transmis, de la prise de mouvement de l'engin tracteur à l'arbre porte-disques (6), par l'intermédiaire d'un multiplicateur (15), de deux liaisons à cardan (16), d'arbres cannelés (17), montés chacun dans un palier (18) fixé contre le côté intérieur des bras porte-rotor (7), et d'une transmission, par poulies (24 et 25) ou pignons, montée dans un carter amovible (23), pouvant être indifféremment fixé dans un sens ou dans l'autre, afin d'obtenir la permutation de la poulie ou du pignon mené (25) avec la poulie ou le pignon menant (24) en vue d'inverser le rapport de réduction.

12. Instrument selon les revendications 1 et 11, caractérisé en ce que l'axe de l'arbre cannelé (17), d'entraînement de la poulie (24) ou du pignon menant, est confondu avec l'axe d'articulation (8) des bras porte-rotor (7).

13. Instrument selon la revendication 1, caractérisé en ce que l'arc-boutant (12) de réglage et de maintien en position du rotor est équipé d'un dispositif amortisseur.

FIG.1

0243262

# FIG.2

# FIG.3

# FIG.4

# FIG. 5

# FIG.6

0243262

FIG.7

## Office européen des brevets

## RAPPORT DE RECHERCHE EUROPEENNE

| Catégorie | Citation du document avec indication, en cas de besoin, des parties pertinentes | Revendication concernée | CLASSEMENT DE LA DEMANDE (Int Cl.4) |
|---|---|---|---|
| **DOCUMENTS CONSIDERES COMME PERTINENTS** | | | |
| A | FR-A-1 501 969 (P.VIAUD & CIE) <br> * En entier * <br><br> --- | 1 | A 01 B 49/02 <br> A 01 B 33/16 |
| A | GB-A-2 126 862 (VAN DER LELY) <br> * Page 2, lignes 113-130; page 3, lignes 1-101; figures 1-4 * <br><br> --- | 1 | |
| A | FR-A-2 112 151 (S.A.R.L. ROGER) <br><br> --- | | |
| A | US-A-3 388 750 (HAMM) <br><br> --- | | |
| A | DE-A-3 229 232 (WEICHEL) <br><br> --- | | |
| A | DE-A-3 326 236 (WEICHEL) <br><br> ----- | | **DOMAINES TECHNIQUES RECHERCHES (Int. Cl.4)** <br><br> A 01 B |

Le présent rapport de recherche a été établi pour toutes les revendications

| Lieu de la recherche | Date d'achèvement de la recherche | Examinateur |
|---|---|---|
| LA HAYE | 17-06-1987 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82